# DEMANDE DE BREVET EUROPEEN

(11) **EP 0 856 400 A1**
(43) Date de publication de la demande: **05.08.1998**
(21) Numéro de dépôt: 98400068.7
(22) Date de dépôt: 15.01.1998
(51) Int. Cl.: B32B 31/00, B32B 7/12, B29C 59/14, C08J 5/12, C08J 7/00, C09J 5/02

(54) **Procédé de fabrication d'un objet à base d'un polymère du type polyéther-éther-cétone**

(30) Priorité: 31.01.1997 FR 9701089
(71) Demandeur: Dassault Electronique, 92214 Saint-Cloud Cedex (FR)
(72) Inventeur: Zallo, Pascal, 92110 Clichy (FR); Pacreau, François, 75005 Paris (FR)
(74) Mandataire: Bezault, Jean

(57) **Abrégé**

Un objet à base d'un polymère du type polyéther-éther-cétone comprend une couche du polymère (2,3) assemblée par collage à un support (1) par un procédé de fabrication comprenant les étapes suivantes :
(a) prétraitement des surfaces de contact (4,5,6,7),
(b) gravure par plasma de l'une au moins des surfaces de contact (4,5,6,7) issues de l'opération (a) dans des conditions contrôlées pour produire des radicaux chimiques libres et créer des sites de collage,
(c) application d'un adhésif entre les surfaces de contact issues de l'opération (b), ledit adhésif étant choisi pour interagir avec les radicaux chimiques libres ainsi produits et se fixer sur les sites de collage, et
(d) serrage des surfaces de contact dans des conditions contrôlées de pression, de température et de durée.

Application notamment à la réalisation de matériaux multicouches.

## Description

L'invention concerne les objets, en particulier en forme de plaques, comprenant un polymère du type polyéther-éther-cétone et, plus particulièrement, un procédé de fabrication de tels objets.

Le polymère précité, encore appelé PEEK (abréviation du terme anglo-saxon "polyether-ether-ketone"), est un polymère thermoplastique qui possède d'intéressantes propriétés, notamment une bonne tenue thermique du fait de son point de fusion élevé (334°C), une excellente inertie chimique vis-à-vis des milieux agressifs, et une bonne transparence électromagnétique.

Du fait de ces propriétés, ce polymère trouve de nombreuses applications dans divers domaines, lorsque l'objet dont il est formé est soumis à des contraintes élevées dans un environnement particulièrement sévère.

Ce polymère est utilisé en particulier sous la forme de plaques ou films minces pour la réalisation de radomes d'aéronefs.

Toutefois, lorsque ce matériau est utilisé en films minces et qu'il doit être soumis à des contraintes mécaniques élevées, il est généralement nécessaire de l'assembler à un support, par exemple en forme de couche, possédant une tenue mécanique appropriée.

Il est connu notamment de réaliser des matériaux multicouches comprenant une couche du polymère précité assemblée à un support renforcé, telle qu'une couche du même polymère renforcé par des fibres de verre ou de silice.

Dans les applications particulièrement difficiles, par exemple à fortes variations de température, une symétrie mécanique est souhaitable. La couche de polymère renforcé est alors habituellement maintenue en sandwich entre deux couches du polymère pur.

Dans tous les cas, il se pose un problème pour réaliser un assemblage entre la couche de polymère et le support qui permet à la couche de polymère et au support de rester assemblés et de résister aux contraintes du milieu ambiant dans lequel l'objet doit être placé.

Il est envisageable de fabriquer des matériaux multicouches du type précité, dans lesquels la couche du polymère est assemblée au support par fusion de ce polymère.

Toutefois, un tel procédé d'assemblage est particulièrement délicat et difficile à mettre en oeuvre car il nécessite une température de traitement proche de celle du point de fusion du polymère et des pressions élevées pour permettre un assemblage intime entre la couche de polymère et le support.

En particulier, lorsqu'un tel procédé est appliqué à la fabrication du matériau sandwich tel que défini plus haut, les fibres de renfort de la couche support ont tendance à migrer vers l'une ou l'autre des deux couches de polymère qui encadrent la couche support.

Il en résulte que les fibres tendent à venir affleurer à la surface du matériau sandwich, ce qui est gênant pour certaines applications.

L'invention a notamment pour but de surmonter les inconvénients précités, en proposant un procédé de fabrication perfectionné, ne faisant pas appel à un assemblage par fusion du polymère constitutif de la couche.

La Demanderesse a orienté ses travaux sur un assemblage par collage, mais s'est trouvée confrontée à de nombreux problèmes du fait notamment que le polymère précité est particulièrement inerte chimiquement, ce qui empêche un bon accrochage de la colle.

L'invention propose en conséquence un procédé de fabrication d'un objet, en particulier en forme de plaque, à base d'un polymère du type polyéther-éther-cétone (ou PEEK), dans lequel une couche du polymère est assemblée à un support par des surfaces de contact respectives.

Conformément à l'invention, le procédé de fabrication comprend les opérations suivantes :
(a) prétraitement des surfaces de contact,
(b) gravure par plasma de l'une au moins des surfaces de contact issues de l'opération (a) dans des conditions contrôlées pour produire des radicaux chimiques libres et créer des sites de collage,
(c) application d'un adhésif entre les surfaces de contact issues de l'opération (b), ledit adhésif étant choisi pour interagir avec les radicaux chimiques libres ainsi produits et se fixer sur les sites de collage, et
(d) serrage des surfaces de contact dans des conditions contrôlées de pression, de température et de durée.

Ainsi, le procédé de fabrication de l'invention repose essentiellement sur un assemblage de la couche de polymère et du support par un collage dans des conditions bien maîtrisées.

Il est essentiel pour obtenir un assemblage résistant que les surfaces de contact à assembler soient soumises d'abord à un prétraitement puis à une gravure par plasma pour l'une au moins des surfaces de contact, afin de créer des sites de collage.

Enfin, le procédé de l'invention nécessite l'utilisation d'un adhésif choisi, compatible avec la nature des sites de collage, et cela dans des conditions opératoires maîtrisées.

Dans une forme de réalisation préférée de l'invention, l'opération de prétraitement (a) comprend :
(a1) un dégraissage des surfaces de contact par un ou des solvants organiques, et
(a2) une abrasion mécanique des surfaces de contact dégraissées issues de l'opération (a1), dans des conditions douces.

Pour l'opération de dégraissage (a1), conviennent différents types de solvants organiques, notamment la méthyl-éthyl cétone.

L'abrasion mécanique (a2) doit être effectuée dans des conditions douces pour ne pas éliminer trop de matière. Cette abrasion peut être effectuée notamment à l'aide d'un papier de verre de grade 220 (au plus).

L'opération de gravure par plasma (b) constitue une étape clé qui doit être effectuée dans des conditions contrôlées pour produire des radicaux chimiques libres et créer des sites de collage.

En fait, le but principal de cette gravure par plasma est de casser les liaisons chimiques du matériau (en particulier du polymère du type PEEK) afin d'augmenter sa mouillabilité et de débarrasser les surfaces de contact de tout polluant.

Cette opération consiste à graver la surface de contact par un plasma, c'est-à-dire un gaz réactif formé en faisant passer un milieu gazeux au travers d'un courant électrique de fréquence choisie. Le milieu gazeux de départ pour la réalisation du plasma doit être également choisi.

En effet, compte tenu du fait que le PEEK est un polymère aromatique relativement résistant vis-à-vis de la gravure par plasma à oxygène pur, il est nécessaire d'utiliser un autre type de gaz.

Dans le cadre de l'invention, on préfère utiliser un mélange d'oxygène et de tétrafluorure de carbone dans un rapport volumique particulier : 70% d'O₂ et 30% de CF₄.

Il a été constaté que la gravure par plasma donne de bien meilleurs résultats que les autres traitements de gravure, comme une gravure sulfochromique par attaque à l'aide d'une solution d'acide sulfurique et de dichromate de sodium.

Toutefois, il entre également dans le cadre de l'invention de combiner la gravure par plasma avec un traitement de gravure chimique ou avec un autre type de traitement.

Lors de l'opération de prétraitement (a) et de l'opération de gravure par plasma (b), il est nécessaire de protéger les parties restantes (c'est-à-dire les surfaces autres que les surfaces de contact) de la couche de polymère et du support, pour les mettre à l'abri.

Cette opération de protection peut s'effectuer notamment par application d'un film de polytétrafluoroéthylène.

Après l'opération de gravure par plasma (b), il est nécessaire de procéder à l'application de l'adhésif (opération (c)) dans un délai limité, généralement inférieur à 24 heures, car la durée de vie du traitement de gravure par plasma est limitée.

L'opération (c) comprend l'application d'un adhésif particulier, qui doit être choisi pour être compatible avec la nature des sites de collage créés par l'opération précédente de gravure par plasma.

A titre d'exemples d'adhésifs convenant à la mise en oeuvre de l'invention, conviennent plus particulièrement les adhésifs du type époxyde, du type polyuréthanne ou encore du type silicone.

Egalement, il peut être envisagé de faire appel à un adhésif du type thermoplastique.

Cet adhésif peut être appliqué, soit sous la forme d'une pâte, soit encore sous la forme d'un film supporté ou non supporté.

Dans tous les cas, l'adhésif est appliqué sous la forme d'une couche ayant une épaisseur contrôlée, typiquement comprise entre 50 et 300 micromètres.

Compte tenu du caractère critique de l'épaisseur de la couche, il est commode d'appliquer l'adhésif sous la forme d'un film supporté ou non supporté, car l'épaisseur du film est bien maîtrisée.

Toutefois, l'adhésif en pâte appliqué par enduction demeure très intéressant, même si le contrôle de l'épaisseur de l'adhésif est plus délicat.

Bien que les phénomènes en cause ne soient pas encore complètement expliqués, il semble bon de rechercher un compromis adéquat entre la souplesse et l'épaisseur des joints d'adhésif.

L'opération de serrage des surfaces de contact doit s'effectuer dans des conditions contrôlées de pression, de température et de durée.

Généralement, celle-ci est effectuée sous une pression d'environ 0,5 à 2 bars (0,5 x 10⁵ à 2 x 10⁵ Pa), à une température d'environ 20 à 150°C et pendant une durée de 30 minutes à 2 heures pour les adhésifs du type époxyde, polyuréthanne ou silicone.

L'opération de serrage est effectuée sous une pression d'environ 0,5 à 10 bars (0,5 x 10⁵ à 10⁶ Pa), à une température d'environ 100 à 300°C et pendant une durée d'environ 30 minutes à 2 heures pour les adhésifs du type thermoplastique.

Le procédé de l'invention permet ainsi d'assembler une couche de PEEK à un support qui, de façon préférentielle, est formé du même polymère et qui comporte en outre un renfort, en particulier un tissu à base de fibres de verre ou de silice.

Un tel objet, qui peut se présenter notamment sous la forme d'une plaque, constitue un matériau multicouche, en particulier un matériau à trois couches du type sandwich.

En pareil cas, l'objet comprend une couche support en PEEK renforcé, maintenue en sandwich entre deux couches de PEEK pur. L'assemblage d'un tel matériau sandwich nécessite donc la préparation de quatre surfaces de contact et l'application de deux couches d'adhésif.

Sous un autre aspect, l'invention concerne un objet, tel qu'obtenu par la mise en oeuvre du procédé défini précédemment.

Dans une forme de réalisation préférée de l'invention, cet objet est réalisé sous la forme d'un matériau comprenant une couche support formée de PEEK renforcé, cette couche support étant prise en sandwich entre deux couches de PEEK pur et collée à ces dernières.

La couche support comprend avantageusement un renfort à base de fibres de verre ou de silice.

On peut ainsi réaliser notamment un matériau sandwich ayant une épaisseur totale relativement fine, typiquement de l'ordre de 1,5 à 3 mm, qui possède à la fois une bonne tenue thermique, une bonne résistance aux milieux agressifs, une bonne transparence électromagnétique et une bonne tenue mécanique.

Dans la description qui suit, faite seulement à titre d'exemple, on se réfère au dessin annexé, sur lequel :
- la figure 1 est une vue en coupe schématique d'un matériau du type sandwich selon l'invention, avant assemblage; et
- la figure 2 est une vue analogue à celle de la figure 1 après assemblage.

Dans cet exemple, on prépare un matériau sandwich comprenant une couche support 1 formée de PEEK renforcé de fibres de silice et disposée entre deux couches externes 2 et 3, toutes deux formées de PEEK pur.

La couche support intermédiaire 1 est un matériau composite formé de PEEK renforcé par 33% en volume de fibres de silice et possédant une épaisseur totale de 1,2 mm. La couche 1 provient d'un empilement alterné de n+1 plis de tissu PEEK et de n plis de tissu de silice. Ces tissus peuvent être obtenus auprès de la Société française CTMI, respectivement sous les références 5792 et 5465.

A titre d'exemple, on peut utiliser huit plis de tissu de PEEK et sept plis de tissu de silice.

La préparation du matériau composite de la couche 1 s'effectue en autoclave selon le processus suivant. A température ambiante, la pression est augmentée jusqu'à une valeur de 10 bars (10⁶ Pa) à une vitesse de 1 bar/minute (10⁵ Pa/minute). Dans le même temps, et une fois que la pression de 3 bars (3 x 10⁵ Pa) est atteinte, la température augmente pour arriver à 400°C au rythme de 7°C/minute. Ensuite, on observe un palier de 20 minutes puis on réalise un refroidissement de 5°C/minute pour atteindre les 25°C.

Le PEEK pur utilisé pour former les couches 2 et 3 est un film mince, encore appelé "peau", ayant une épaisseur de 250 micromètres et provenant d'un rouleau de film disponible auprès de la société PETROCHEMIE DANUBIA, sous la Marque LITREX TK.

La couche intermédiaire 1 possède des surfaces de contact 4 et 5 qui doivent être assemblées respectivement à des surfaces de contact 6 et 7 des couches 2 et 3 de PEEK pur.

Avant de procéder au traitement des surfaces 4, 5, 6 et 7 et à leur collage, il est nécessaire de protéger les autres parties apparentes des couches 2 et 3, par exemple par application d'un film de polytétrafluoroéthylène (PTFE).

Les surfaces 4, 5, 6 et 7 précitées sont tout d'abord soumises à un prétraitement comprenant un dégraissage à l'aide d'un solvant organique, par exemple de la méthyl-éthyl cétone, suivi par une abrasion modérée avec du papier de verre de grade 220. Ce traitement abrasif doit être effectué dans des conditions modérées pour ne pas enlever trop de matériau et, notamment, ne pas mettre à nu le renfort de la couche intermédiaire 1.

Ensuite, les surfaces de contact 4, 5, 6 et 7 sont soumises à une gravure par plasma. On utilise pour cela un mélange d'oxygène et de tétrafluorure de carbone dans des proportions volumiques respectives de 70% et 30% .

Pour produire le plasma, on utilise un réacteur PSM-1224 provenant de la société LFE CORPORATION, lequel est excité par une radiofréquence (13,56 MHz).

Les surfaces de contact préalablement abrasées sont soumises à un flux de 500 cm³/minute du mélange gazeux précité à une puissance de 1,1 kW pendant 15 minutes.

Cette gravure par plasma permet de casser les liaisons chimiques du polymère pour produire des radicaux chimiques libres et créer des sites de collage. En même temps, ce traitement permet de volatiliser certains matériaux organiques qui polluent les surfaces de contact et d'augmenter la mouillabilité.

Les surfaces ainsi traitées sont prêtes pour le collage. Cette opération de collage doit être effectuée dans un délai donné, généralement inférieur à 24 heures, pour ne pas perdre le bénéfice des traitements précédents.

Dans l'exemple, on utilise un adhésif époxyde bicomposant commercialisé sous la Marque SCOTCHWELD EC-2216 par la firme 3M.

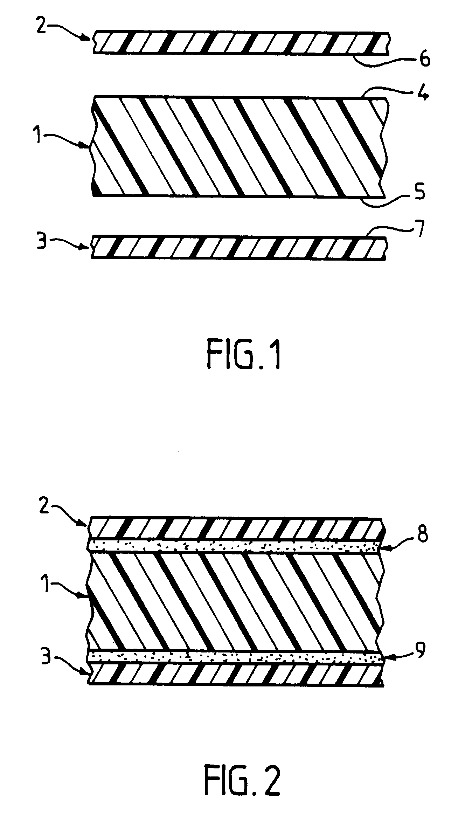

On applique, sur chacune des surfaces 4, 5, 6 et 7, une couche mince d'adhésif dont l'épaisseur est comprise entre 50 et 300 micromètres. Ensuite, on effectue le serrage des couches 1, 2 et 3 l'une contre l'autre, comme montré à la figure 2, ce qui permet de former des films d'adhésif 8, 9 entre la couche 1 et respectivement les couches 2 et 3.

L'ensemble est maintenu serré à une pression généralement comprise entre 0,5 et 2 bars (0,5 x 10⁵ à 2 x 10⁵ Pa) et à une température de 20 à 150°C, pendant une durée de 30 minutes à 2 heures. Après durcissement de l'adhésif, on obtient un matériau stratifié, du type sandwich, ayant une épaisseur totale de l'ordre de 2mm et qui possède de bonnes propriétés de tenue à la température, d'inertie chimique, de transparence électromagnétique, et de tenue mécanique.

Un tel matériau peut être utilisé en particulier pour la réalisation d'un radôme d'aéronef.

Des contraintes mécaniques particulièrement éprouvantes, et à ce jour non modélisées correctement, sont rencontrées par les aéronefs volant sous la pluie ou autres intempéries, ce que l'on appelle "pluvio-érosion". Il s'est avéré que l'assemblage décrit résiste particulièrement bien dans ces conditions, même aux vitesses atteignant ou dépassant la vitesse du son.

En ce sens, le mot "aéronef" couvre tous les objets se déplaçant dans l'air.

Là où la transparence électromagnétique n'est pas critique, on peut remplacer les fibres de verre par des fibres de carbone (ou équivalent) dans le matériau support. Un assemblage polymère sur métal est également réalisable.

De même, l'invention peut s'appliquer non seulement à des plaques, mais aussi à d'autres catégories d'objets "conformés" de formes planes ou non planes.

De plus, le procédé peut être appliqué à l'assemblage d'une couche de PEEK sur d'autres types de supports, notamment en forme de couches, formés d'un matériau différent du PEEK.

## Revendications

1. Procédé de fabrication d'un objet, en particulier en forme de plaque, à base d'un polymère du type polyéther-éther-cétone (PEEK), dans lequel une couche du polymère est assemblée à un support par des surfaces de contact respectives,
caractérisé en ce qu'il comprend les opérations suivantes :
(a) prétraitement des surfaces de contact,
(b) gravure par plasma de l'une au moins des surfaces de contact issues de l'opération (a) dans des conditions contrôlées pour produire des radicaux chimiques libres et créer des sites de collage,
(c) application d'un adhésif entre les surfaces de contact issues de l'opération (b), cet adhésif étant choisi pour interagir avec les radicaux chimiques libres ainsi produits et se fixer sur les sites de collage, et
(d) serrage des surfaces de contact dans des conditions contrôlées de pression, de température et de durée.

2. Procédé selon la revendication 1, caractérisé en ce que l'opération de prétraitement (a) comprend :
(a1) un dégraissage des surfaces de contact par un ou des solvants organiques, et
(a2) une abrasion mécanique des surfaces de contact dégraissées issues de l'opération (a1), dans des conditions douces.

3. Procédé selon l'une des rvendications 1 et 2, caractérisé en ce que le plasma est un mélange d'oxygène et de trétrafluorure de carbone excité par radiofréquence.

4. Procédé selon l'une des revendications 1 à 3, caractérisé en ce que l'adhésif est choisi parmi les adhésifs du type époxyde, polyuréthanne et silicone.

5. Procédé selon l'une des revendications 1 à 3, caractérisé en ce que l'adhésif est du type thermoplastique.

6. Procédé selon l'une des revendications 1 à 5, caractérisé en ce que l'adhésif est appliqué sous la forme d'une pâte.

7. Procédé selon l'une des revendications 1 à 5, caractérisé en ce que l'adhésif est appliqué sous la forme d'un film supporté ou non supporté.

8. Procédé selon l'une des revendications 1 à 7, caractérisé en ce que l'adhésif est appliqué sous la forme d'une couche ayant une épaisseur comprise entre 50 et 300 micromètres.

9. Procédé selon l'une des revendications 1 à 4 et 6 à 8, caractérisé en ce que l'opération de serrage (d) est effectuée sous une pression d'environ 0,5 à 2 bars (0,5 x 10⁵ à 2 x 10⁵ Pa), une température d'environ 20 à 150°C et pendant une durée d'environ 30 minutes à 2 heures lorsque l'adhésif est du type époxyde, polyuréthanne ou silicone.

10. Procédé selon l'une des revendications 1 à 3 et 5 à 8, caractérisé en ce que l'opération de serrage est effectuée sous une pression d'environ 0,5 à 10 bars (0,5 x 10⁵ à 10⁶ Pa), à une température d'environ 100 à 300°C et pendant une durée d'environ 30 minutes à 2 heures lorsque l'adhésif est du type thermoplastique.

11. Procédé selon l'une des revendications 1 à 10, caractérisé en ce qu'il est appliqué à la préparation d'un objet dans lequel la couche de polymère est assemblée à une couche support formée à partir du même polymère et comportant un renfort.

12. Procédé selon la revendication 11, caractérisé en ce qu'il est appliqué à la préparation d'un objet dans lequel la couche support est en sandwich entre deux couches de polymère.

13. Objet, en particulier en forme de plaque, tel qu'obtenu par la mise en oeuvre du procédé selon l'une des revendications 1 à 12.

14. Objet selon la revendication 13, caractérisé en ce qu'il est réalisé sous la forme d'un matériau comprenant une couche support formée du polymère et munie d'un renfort, cette couche support étant prise en sandwich entre deux couches du polymère et collée à ces dernières.

15. Objet selon la revendication 14, caractérisé en ce que la couche support comprend un renfort de fibres de verre ou de silice.
